# DEMANDE DE BREVET EUROPEEN

(11) **EP 3 351 781 A1**
(43) Date de publication de la demande: **25.07.2018**
(21) Numéro de dépôt: 17210009.1
(22) Date de dépôt: 22.12.2017
(51) Int. Cl.: F02D 41/14, F02D 41/30, F02D 41/24, F01N 3/20

(54) **PROCÉDÉ DE PILOTAGE D'UN GROUPE MOTOPROPULSEUR POUR UNE DÉPOLLUTION DE SA LIGNE D'ÉCHAPPEMENT**

(30) Priorité: 24.01.2017 FR 1750563
(71) Demandeur: PSA Automobiles SA, 78300 Poissy (FR)
(72) Inventeur: BERNARD, YOAN, 78570 ANDRESY (FR); ZUMI, MICHEL, 92600 ASNIERES SUR SEINE (FR)

(57) **Abrégé**

L'invention concerne un procédé de pilotage d'un groupe motopropulseur (GMP) de véhicule, le pilotage comprenant un premier mode (NOx f) et un deuxième mode (CO2 f) de fonctionnement, le premier mode (NOx f) étant moins émissif d'un polluant que le deuxième mode (CO2 f), caractérisé en ce que, lors d'un premier mode (NOx f), on détermine pour la fenêtre courante si la différence de la quantité de polluant (ΔX) en sortie de la ligne avec une quantité de polluant cible est inférieure à un premier seuil (a), on détermine si la somme de ces différences (SNOx X) sur les fenêtres successives est inférieure à un deuxième seuil (c) et si l'efficacité de l'élément de dépollution (RCS) est jugée suffisante pour traiter le polluant avec le deuxième mode (CO2 f), celui-ci est appliqué au début de la fenêtre courante suivante.

## Description

L'invention porte sur un procédé de pilotage de paramètres de fonctionnement d'un groupe motopropulseur, c'est-à-dire le ou les moteurs, la boîte de vitesses et le système de dépollution pour optimiser les émissions d'un véhicule automobile, particulièrement les oxydes d'azote, tout en maîtrisant au meilleur niveau possible la consommation de carburant. Cette optimisation nécessite une gestion concertée des émissions du moteur, dites émissions à la source et du système de post-traitement de la ligne d'échappement. Le pilotage selon la présente invention se fait à partir d'une évaluation de l'efficacité de dépollution instantanée mais aussi de l'historique des efficacités de dépollution antérieures.

La présente invention s'inscrit donc dans le domaine technique du pilotage global d'une chaîne de traction, notamment mais pas uniquement de ses modes de combustion par une unité de contrôle commande du groupe motopropulseur, le groupe motopropulseur étant équipé d'un moteur thermique avantageusement Diesel. Par paramètres de fonctionnement du groupe motopropulseur, il sera entendu des paramètres de fonctionnement du moteur thermique, principalement des paramètres de combustion et d'injection de carburant.

Par paramètres de fonctionnement, il est aussi entendu comme étant de tels paramètres des paramètres relevant de dispositifs auxiliaires du groupe motopropulseur et pas uniquement du moteur thermique. Des exemples de paramètres seront ultérieurement donnés.

La présente invention est applicable pour limiter les émissions de polluant du groupe motopropulseur à tout type de polluant présent dans les gaz d'échappement mais elle concerne plus particulièrement la réduction des émissions d'oxydes d'azotes, aussi dénommés sous leur formule chimique de NOx, formule qui pourra être aussi utilisée dans ce qui suit. Outre la réduction des émissions à la source, cette dépollution se fait également grâce à un système de dépollution comme mais non limitativement la réduction catalytique sélective, aussi dénommé système RCS, appellation qui pourra aussi être utilisée dans ce qui suit.

Un système de réduction catalytique sélective par injection dans la ligne d'échappement d'un agent de dépollution dit réducteur RCS, cet agent étant avantageusement mais non limitativement de l'urée ou un dérivé de l'urée, précurseur de l'ammoniac, est utilisé pour réduire les oxydes d'azote ou NOx présents dans les gaz évacués du moteur thermique par une ligne d'échappement.

Un tel système présente une unité de commande capable d'estimer ou de mesurer les quantités d'oxydes d'azote par seconde émis en sortie du moteur mais également en sortie de ligne d'échappement. L'unité de commande du système RCS calcule aussi une quantité d'agent réducteur à injecter dans la ligne d'échappement selon des paramètres de la ligne d'échappement et/ou des paramètres de combustion dans le moteur à combustion interne. Ce calcul peut se faire en boucle ouverte.

Un système RCS présente des limites physiques de traitement. Il est donc nécessaire dans certaines situations de limiter les émissions à la source pour atteindre une performance d'émission de NOx en sortie de la ligne d'échappement, afin de garantir par exemple les seuils réglementaires, de plus en plus restrictifs et qui peuvent concerner aussi bien les émissions courantes qu'une plage précédente de fonctionnement du véhicule.

Dans le cas particulier des NOx en Diesel, limiter les émissions de NOx à la source conduit généralement à dégrader le rendement énergétique de la chaîne de traction et donc induit une augmentation de la consommation de carburant du véhicule. Cette augmentation de consommation se traduit par une augmentation dans les mêmes proportions des émissions de dioxyde de carbone, ci-après aussi dénommé CO₂ les deux étant liées.

Les réglages du moteur et, par exemple, de la boîte de vitesses, permettent un fonctionnement peu émissif en émission du polluant considéré, par exemple des NOx, et ceux permettant un comportement sobre en consommation de carburant présentent de très fortes discontinuités et ne permettent pas l'application d'une fonction de régulation simple entre ces différents états.

Les règles de décision pour passer d'un mode de fonctionnement peu émissif en NOx à un mode de fonctionnement sobre en carburant et, le cas échéant, en émission de CO₂ sont donc généralement calibrées sur des grandeurs d'environnement que sont par exemple, sans que cela soit limitatif, la vitesse du véhicule, la température du moteur et de la ligne d'échappement, notamment la température du système RCS.

Le problème du passage entre de tels modes de fonctionnement est qu'il ne permet pas de trouver le juste compromis entre, d'une part, le respect des émissions véhicule en sortie de la ligne d'échappement sur toutes situations de vie et, d'autre part, une minimisation de la consommation en carburant dudit véhicule.

Le document FR-A-3 031 764 décrit un procédé de contrôle d'un groupe motopropulseur comprenant un moteur thermique relié à une ligne d'échappement dans laquelle est disposé un système de dépollution d'un polluant présent dans les gaz d'échappement émis par le moteur. Un calculateur de commande du groupe motopropulseur comprend en mémoire plusieurs modes de fonctionnement distincts du groupe motopropulseur. Il est déterminé une teneur du polluant dans les gaz d'échappement à ne pas dépasser en sortie de ligne d'échappement.

On estime pour chacun des modes de fonctionnement prédéterminés la teneur du polluant produite à la source par le moteur thermique, l'efficacité maximum de dépollution du polluant par le système de dépollution, la teneur attendue du polluant en aval du système de dépollution, à partir de la teneur attendue à la source et l'efficacité maximum de dépollution associée. On compare les teneurs estimées pour chacun des modes de fonctionnement prédéterminés à la teneur cible et on applique parmi les modes de fonctionnement pour lequel la teneur estimée est inférieure à la teneur cible celui qui permet la moindre consommation de carburant.

Par conséquent, le problème à la base de la présente invention est d'obtenir un processus de décision embarqué qui permette de choisir un mode optimal parmi des modes de fonctionnement discrets du groupe motopropulseur en ce qui concerne les émissions d'un polluant donné dans les gaz d'échappement en fin de ligne d'échappement.

Pour atteindre cet objectif, il est prévu selon l'invention procédé de pilotage de paramètres de fonctionnement d'un groupe motopropulseur de véhicule automobile, dans lequel un suivi des émissions d'un polluant prédéterminé rejeté par une ligne d'échappement est effectué, ce polluant prédéterminé étant au moins partiellement traité par un élément de dépollution présent dans la ligne d'échappement, une efficacité de traitement de l'élément de dépollution étant déterminée, le pilotage étant réalisé à partir d'un premier mode et d'au moins un deuxième mode de réglage des paramètres de fonctionnement, le premier mode étant moins émissif de ce polluant à la source que ledit au moins deuxième mode, un nombre de fenêtres successives de durée déterminées incluant une fenêtre courante étant fixée pour le suivi des émissions du polluant prédéterminé, caractérisé en ce que, lors d'un premier mode,
- on détermine pour la fenêtre courante, la différence de la quantité de polluant en sortie de la ligne avec une quantité de polluant cible,
on détermine la somme de ces différences sur nombre prédéterminé de fenêtres successives incluant la fenêtre courante,
et, si la différence de la quantité de polluant en sortie de la ligne avec une quantité de polluant cible pour la fenêtre courant est inférieure à un premier seuil, que la somme de ces différences sur le nombre prédéterminé de fenêtres successives est inférieure à un deuxième seuil, et que l'efficacité de traitement de l'élément de dépollution est jugée suffisante pour traiter les émissions du polluant prédéterminé avec le deuxième mode, le premier mode est remplacé au début de la fenêtre courante suivante par le deuxième mode de réglage pour le pilotage des paramètres du groupe motopropulseur, sinon on garde le premier mode pour la fenêtre courante suivante.

L'effet technique est d'obtenir un compromis optimal dans toutes les situations de vie qui dépend du niveau de performance de l'élément de dépollution. Si la dépollution est correctement assurée et l'a été lors des fenêtres précédentes, la présente invention propose de passer à un mode de fonctionnement concernant l'ensemble du groupe motopropulseur, c'est-à-dire non seulement le moteur thermique mais aussi les éléments auxiliaires associés au moteur thermique, moins sévère en terme d'émission à la source du polluant mais présentant des avantages notamment sur le rendement du moteur et donc la consommation en carburant, sachant que les émissions globales du polluant concerné resteront constantes car compensées par l'efficacité du système de post-traitement. La chaîne de traction du véhicule répond alors de façon optimale à un cahier des charges concernant, d'une part, la limitation des émissions d'un polluant et, d'autre part, la maîtrise de la consommation de carburant ou, le cas échéant, d'un agent de dépollution, par exemple à base d'urée pour un système RCS. Toutes ces stratégies se font dans le respect absolu des réglementations en vigueur sur les émissions.

Pour cela, afin d'autoriser le changement de mode il convient de vérifier que le cumul des quantités de polluant à la sortie de la ligne d'échappement est bien inférieur à un seuil, ceci pour la fenêtre courante. De plus, il faut que le premier mode de fonctionnement mis en oeuvre n'ait pas eu d'impact négatif sur la tenue du niveau de polluant total en sortie de ligne d'échappement requis sur une durée prédéterminée, par exemple un roulage courant, c'est-à-dire dans une durée s'étendant sur plusieurs fenêtres de mesure. Si ces deux conditions ne sont pas réunies, on reste dans le mode de fonctionnement le moins émissif.

Dans le cas où le seuil a été respecté aussi bien lors de la fenêtre courante que sur une durée prédéterminée précédent et comprenant la fenêtre courante, il est alors possible de choisir un mode de fonctionnement du groupe motopropulseur plus émissif en polluant considéré, l'efficacité du système de dépollution étant en mesure d'assurer l'atteinte du seuil requis. Il est cependant toujours possible de revenir au mode de fonctionnement initial si l'efficacité du système de dépollution par le mode de remplacement s'avère insuffisante.

Avantageusement, quand au moins trois modes de réglage sont présents, en cas de remplacement du premier mode, ce premier mode est remplacé par un des au moins deux autres modes le moins émissif. Il peut donc y avoir aussi bien pour le groupe motopropulseur pris dans son ensemble que pour le moteur thermique faisant partie du groupe motopropulseur plusieurs modes de fonctionnement variant d'un mode moins émissif à la source, lorsque l'efficacité du système de dépollution est faible à des modes progressivement plus émissifs à la source, lorsque l'efficacité de dépollution est élevée, ces modes favorisant notamment la consommation en carburant du moteur thermique. Les remplacements de mode peuvent donc se faire progressivement en adoptant le meilleur compromis NOx/CO₂ dans le respect des réglementations en vigueur.

Avantageusement, pendant un des modes autres que le premier mode, quand la différence de la quantité de polluant en sortie de la ligne avec la quantité de polluant cible est inférieure au premier seuil pour ce mode autre que le premier mode, le mode autre que le premier mode est maintenu. La mesure sur la fenêtre courante montre que l'autre mode alors en application est suffisant pour maintenir la quantité de polluant en sortie de ligne d'échappement sous la quantité cible : la dépollution des gaz en polluant à la sortie de la ligne d'échappement est alors encore assurée de manière optimale même avec ce mode plus émissif que le premier mode.

Avantageusement, pendant cet autre mode, quand la différence de la quantité de polluant en sortie de la ligne avec la quantité de polluant cible est supérieure au premier seuil, il est effectué une sommation des quantités de polluant rejetées sur un nombre prédéterminé de fenêtres successives et, quand la différence de la sommation des quantités de polluant avec la quantité totale de polluant cible pour ces fenêtres est inférieure au deuxième seuil, l'autre mode est conservé tandis que, quand la différence de la sommation des quantités de polluant avec la quantité totale de polluant cible pour ces fenêtres est supérieure au deuxième seuil, le premier mode est rétabli.

Si pour une fenêtre courante, les niveaux d'émission du polluant ne remplissent pas les critères requis, il est examiné si, sur une certaine durée correspondant à un nombre de fenêtres, l'efficacité de la dépollution a été globalement assurée. Si c'est le cas, le mode moins sévère en termes d'émissions à la source que le premier mode est maintenu. Si ce n'est pas le cas, il convient de repasser au premier mode pour assurer l'atteinte du niveau requis de polluant.

En effet, dans la ligne d'échappement d'un moteur thermique, notamment Diesel, il est fréquent de disposer d'une sonde spécifiquement dédiée au polluant en aval de l'élément de dépollution en se référant au parcours des gaz dans la ligne d'échappement. Il est alors possible de savoir si la cible de quantité de polluant en sortie de la ligne fixée a été tenue pour la fenêtre actuelle et depuis le début du roulage, ceci étant fait en intégrant les diverses quantités de polluant pour les fenêtres successives. C'est le respect de la valeur cible de polluant rejeté sur un long intervalle qui prévaut même si ce respect n'est pas assuré pour une fenêtre courante.

Si cela n'est pas le cas, le premier mode redevient le mode en vigueur et il est basculé vers une combinaison mode de combustion et divers leviers du groupe motopropulseur moins émissive en polluant à la source avec le désavantage d'être moins sobre en consommation de carburant, étant donné que la première priorité du véhicule est le respect de la norme d'émission de polluant et donc de la quantité cible de polluant rejetée pour la fenêtre ou les fenêtres successives.

Dans le cas contraire, le deuxième mode est conservé mais quand au moins trois modes sont à disposition, il peut alors aussi être étudié l'opportunité de basculer vers un mode encore plus sobre en consommation de carburant, l'efficacité du système de dépollution étant en mesure d'assurer l'atteinte du seuil requis d'émission de polluant.

La présente invention a rendu cette transition moins risquée que précédemment opérée par l'état de la technique en rendant cette transition progressive et en surveillant l'effet de cette transition sur les quantités de polluant rejetées dans une fenêtre ou dans la durée de plusieurs fenêtres par rapport aux quantités cibles. Il est alors plus facile de sélectionner le mode qui permet d'optimiser à la fois la dépollution et la consommation de carburant ou de retourner à un mode qui permet de continuer d'assurer le niveau de dépollution au détriment de la consommation.

Avantageusement, le nombre prédéterminé de fenêtres successives est le nombre de fenêtres depuis un début du roulage courant.

Avantageusement, les paramètres de fonctionnement des modes de réglage concernent unitairement ou en combinaison la gestion des lois de passage du groupe motopropulseur, la gestion des prélèvements énergétiques effectués sur le groupe motopropulseur, les modes de combustion du moteur thermique.

Avantageusement, ledit au moins un deuxième mode entraîne une diminution de rejet de dioxyde de carbone dans la ligne d'échappement et une diminution de la consommation de carburant par le moteur thermique.

Avantageusement, les premier et deuxième seuils sont égaux à zéro. Il convient en effet de rester le plus proche des valeurs cibles de quantité de polluant en sortie de ligne d'échappement.

L'invention concerne aussi un groupe motopropulseur d'un véhicule automobile comprenant un moteur thermique et ses éléments auxiliaires dont une ligne d'échappement comprenant au moins un moyen de dépollution d'un polluant rejeté et des moyens de mesure ou d'estimation du polluant en aval de l'élément de dépollution, le moteur et les éléments auxiliaires du groupe motopropulseur étant pilotés par une unité de contrôle commande comportant des moyens de mémorisation d'au moins deux modes de réglage de paramètres de fonctionnement du groupe motopropulseur et des moyens de calcul d'une quantité cible de polluant rejeté, caractérisé en ce que l'unité de contrôle commande comporte des moyens de comparaison des quantités de polluant courante et cible sur plusieurs intervalles de temps et des moyens de mise en oeuvre d'un tel procédé de pilotage de paramètres de fonctionnement d'un groupe motopropulseur.

Un tel groupe motopropulseur est piloté par rapport à une cible de quantité de polluant, par exemple des NOx, prise à la sortie de la ligne d'échappement pour répondre aux exigences des normes en vigueur. La quantité de polluant effective en sortie est mesurée, ceci par un capteur spécifiquement dédié au polluant, ou estimée. En disposant de mesures ou d'estimations d'émissions à la source du mode en cours et des autres modes de fonctionnement, de même que de l'efficacité maximale pouvant être atteinte, il est alors possible de choisir le mode de fonctionnement le plus optimal pour atteindre la cible de polluant en sortie de la ligne d'échappement tout en minimisant la consommation de carburant et, le cas échéant, d'agent réducteur injectée dans la ligne pour la neutralisation du polluant considéré.

Avantageusement, le polluant est sous forme d'oxydes d'azote et l'élément de dépollution est un système de réduction catalytique sélective.

D'autres caractéristiques, buts et avantages de la présente invention apparaîtront à la lecture de la description détaillée qui va suivre et au regard des dessins annexés donnés à titre d'exemples non limitatifs et sur lesquels :

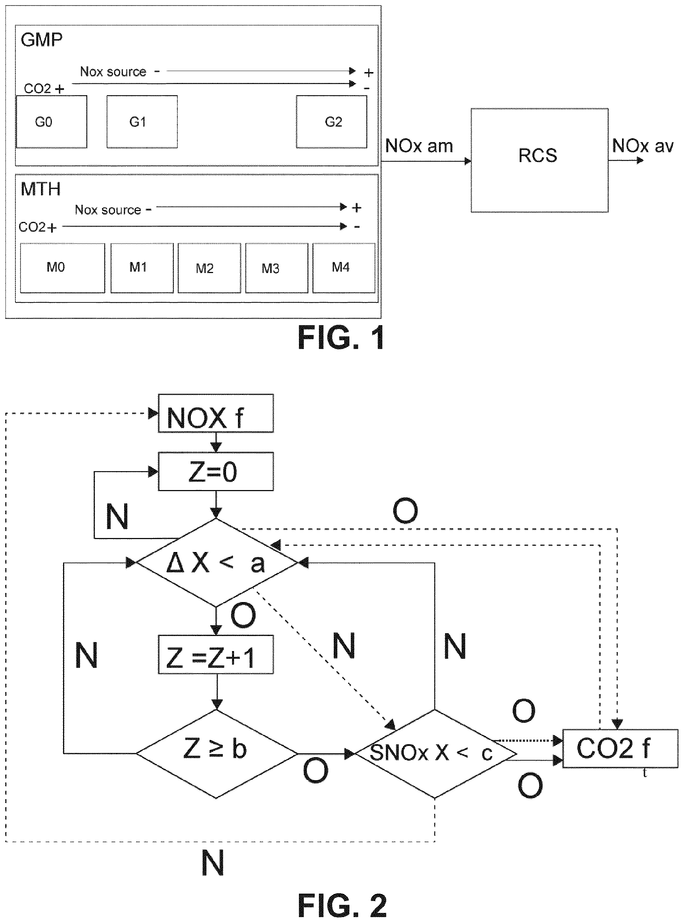

- la figure 1 est une représentation schématique d'un groupe motopropulseur et d'une ligne d'échappement avec mention de divers modes de fonctionnement du groupe motopropulseur et du moteur thermique favorisant plus ou moins soit l'émission des NOx ou soit l'émission du CO2, le procédé de pilotage de paramètres de fonctionnement d'un groupe motopropulseur selon la présente invention pouvant être mis en oeuvre pour un tel groupe motopropulseur,
- la figure 2 montre un logigramme d'un mode de réalisation du procédé de pilotage de paramètres de fonctionnement d'un groupe motopropulseur selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Ce qui est entendu par groupe motopropulseur désigne le moteur thermique mais aussi des dispositifs auxiliaires tels qu'une ligne d'admission d'air, une ligne de recirculation des gaz à l'admission du moteur, un turbocompresseur, une ligne d'échappement avec un ou plusieurs éléments de dépollution dont on peut contrôler par exemple la quantité d'agent réducteur ajoutée dans la ligne ou sa température, une boîte de vitesses avec ses lois de passages et un circuit de refroidissement du moteur en ce qui concerne la gestion de la température du fluide de refroidissement. Cette liste n'est pas limitative.

Il va être pris comme exemple dans ce qui va suivre une dépollution en oxydes d'azote dans la ligne d'échappement, par un système RCS. Ceci n'est pas limitatif et la présente invention peut concerner une dépollution d'un autre polluant ou une dépollution en NOx par un autre système qu'un système RCS, notamment un piège à oxydes d'azote actif ou passif, la température et l'injection de carburant dans la ligne d'échappement jouant alors un rôle important dans la destruction des NOx.

En se référant aux figures, la présente invention concerne un procédé de pilotage de paramètres de fonctionnement d'un groupe motopropulseur GMP de véhicule automobile. Ces paramètres peuvent concerner la combustion du moteur MTH thermique du groupe motopropulseur GMP, notamment l'injection de carburant et l'admission d'air mais aussi la gestion de la dépollution dans la ligne d'échappement des gaz évacués du moteur MTH ou la gestion de la transmission en sortie du moteur MTH.

Dans ce procédé, un suivi des émissions d'un polluant prédéterminé rejeté par une ligne d'échappement du véhicule automobile est effectué, ce polluant prédéterminé, ici des NOx, étant au moins partiellement traité par un élément de dépollution RCS présent dans la ligne d'échappement.

En se référant plus particulièrement à la figure 2, le pilotage est réalisé à partir d'un premier mode NOx f et d'au moins un deuxième mode CO2 f de réglage des paramètres de fonctionnement. Le premier mode NOx f est apte, en coopération avec l'élément de dépollution RCS, à maintenir une quantité de ce polluant prédéterminé en sortie de la ligne d'échappement en relation à une quantité cible de ce polluant. Ledit au moins un deuxième mode CO2 f implique quant à lui des quantités de ce polluant prédéterminé émises à la source supérieures aux quantités émises dans le premier mode NOx f. Il s'ensuit que le premier mode NOx f est plus favorable, lorsque l'efficacité de l'élément de dépollution RCS est limitée, à la dépollution du polluant que ledit au moins un deuxième mode CO2 f.

A la figure 1, il est montré pour un groupe motopropulseur GMP trois modes de fonctionnement G0, G1 et G2 qui permettent d'atteindre le niveau d'émission requis. Le mode G0, moins émissif du polluant prédéterminé à la source, est adopté lorsque l'efficacité de l'élément de dépollution RCS est limitée par exemple en NOx, ceci au détriment de la consommation de carburant et avec une émission d'un autre polluant, ici de CO2, élevée. Le mode G1 est moins efficace que le mode G0 en ce qui concerne les émissions à la source du polluant prédéterminé, mais plus efficace en ce qui concerne l'émission de l'autre polluant, CO2. Il est adopté lorsque l'efficacité de l'élément de dépollution RCS est bonne tout en n'atteignant pas sa performance optimale. Le mode G2 réduit encore la consommation de carburant et les émissions de CO2 par rapport au mode G1 tout en permettant l'atteinte du niveau requis en termes de dépollution en NOx, l'efficacité de l'élément de dépollution RCS étant optimale. Les flèches parallèles traversant horizontalement le groupe GMP montre des émissions à la source croissant inversement pour les NOx et le CO2, les + et - indiquant respectivement les émissions les plus fortes et les plus faibles du polluant considéré, ceci en sortie du moteur d'où l'appellation de NOx source.

Ces modes peuvent concerner des paramètres de gestion de dépollution, de lois de passage de boîte de vitesses et de régulation thermique qui peuvent être adaptés pour ne pas être les plus performants vis-à-vis du rendement du moteur mais en provoquant moins d'émissions du polluant. D'autre part, les modes de fonctionnement du moteur thermique s'enchaînent dans n'importe quel ordre en fonction des émissions globales du véhicule par rapport au niveau requis.

Il peut aussi être procédé à des injections supplémentaires de carburant, par exemple pour chauffer l'élément de dépollution en début de roulage du véhicule, notamment des post-injections de carburant. Le système de refroidissement du moteur thermique peut aussi être réglé dans le but de diminuer les émissions du polluant.

La figure 1 montre aussi schématiquement un moteur thermique MTH avec la possibilité d'inclusion de cinq modes de combustion, concernant essentiellement des paramètres d'injection, dont la quantité de carburant injectée et/ou les instants et le nombre Z d'injections. Le mode M0 augmente la performance de l'élément de dépollution RCS et le mode M1 minimise les émissions à la source tandis que le mode M4 minimise la consommation de carburant. Les modes M2 et M3 sont des modes intermédiaires ménageant consommation de carburant et production de NOx à la source. Les flèches CO2 et NOx source sont aussi présentes pour montrer l'évolution des émissions de ces deux polluants en fonction des modes M0 à M4 en sortie du moteur.

Dans l'élément de dépollution qui est dans l'exemple de la figure 1 un système par injection d'agent réducteur dans la ligne d'échappement, plus précisément un système RCS, l'injection d'agent réducteur est pilotée de telle sorte à maximiser la performance en efficacité du système RCS, l'agent réducteur étant avantageusement de l'urée.

Pour le suivi de la consigne cible de quantité de NOx rejetée en fin de ligne d'échappement, le temps de roulage est découpé en fenêtres de durée d'évaluation successives prédéterminées. On détermine par estimation ou mesure également une l'efficacité du système RCS.

Selon l'invention, en se référant plus particulièrement à la figure 2, lors du premier mode NOx f favorisant prioritairement la réduction du polluant traité à la source, par exemple des NOx, pour une fenêtre d'évaluation courante, quand une différence de la quantité de polluant ΔX en sortie de la ligne avec la quantité de polluant cible est inférieure à un premier seuil a, il est effectué une sommation des quantités de polluant SNOx rejetées pendant un nombre Z prédéterminé de fenêtres successives. Ceci atteste que pour la fenêtre courante, la consigne de dépollution en polluant est respectée ou est proche de l'être selon le premier seuil a prédéterminé. Il est alors vérifié si c'est le cas pour les fenêtres précédentes ajoutées à la fenêtre courante.

Quand la différence de la sommation SNOx X des quantités de polluant SNOx avec la quantité totale de polluant cible pour ces fenêtres est inférieure à un deuxième seuil c, le premier mode NOx f est remplacé par le deuxième mode CO2 f de réglage pour le pilotage des paramètres du groupe motopropulseur GMP. Ceci prouve que sur la durée la dépollution a été assurée et qu'il est possible d'envisager un mode de fonctionnement plus favorable en terme de consommation, l'élément de dépollution RCS ayant la capacité à traiter les émissions de NOx à la source plus élevées.

Comme montré notamment à la figure 1, il peut y avoir au moins trois modes de réglage. Si les conditions énoncées précédemment le permettent, et que l'efficacité de traitement de l'élément de dépollution est jugée suffisante pour traiter les émissions du polluant prédéterminé avec le deuxième mode le premier mode NOx f peut être remplacé par un autre mode CO2 f estimé apte à respecter au moins le deuxième seuil c pour la sommation des quantités de polluant SNOx rejetées, avantageusement un des au moins deux autres modes CO2 f intermédiaire en émission de NOx à la source, pour que le passage d'un mode à un autre se fasse progressivement pour garantir sur le long terme un respect du niveau d'émission de polluant requis.

Il peut être attendu une ou des fenêtres suivantes pour vérifier si cet autre mode CO2 f peut être remplacé par un autre mode CO2 f encore plus performant en terme de consommation et ainsi de suite, pour valider l'aptitude de l'élément de dépollution RCS à traiter le surcroît de NOx à la source et aboutir progressivement au mode de fonctionnement optimisé à la fois en émission et en consommation du carburant.

La figure 2 illustre un mode de réalisation du procédé de pilotage de paramètres de fonctionnement d'un groupe motopropulseur GMP. En partant d'un mode le plus favorable aux émissions à la source référencé NOX f, il est défini un nombre Z de fenêtres. Il est ensuite effectué un questionnement quant à savoir si une différence ΔX de la quantité de polluant en sortie de la ligne avec la quantité de polluant cible est inférieure à un premier seuil a, ce qui est référencé ΔX < a.

Si la réponse à ce questionnement est non, symbolisée par N à la figure 2, il est retourné à Z=0. Si la réponse à ce questionnement est oui, symbolisée par O à la figure 2, il est comptabilisé la fenêtre avec d'autres fenêtres pour que Z passe à Z+1. Quand une différence de la quantité de polluant ΔX en sortie de la ligne avec la quantité de polluant cible est inférieure à un premier seuil a, il peut donc être effectué une sommation des quantités de polluant SNOx rejetées pendant un nombre Z prédéterminé de fenêtres successives. Ceci atteste que pour la fenêtre courante, la consigne de dépollution en polluant est respectée ou est proche de l'être selon le premier seuil a prédéterminé.

Si Z est supérieur ou égal à un seuil de fenêtres b, soit Z ≥ b, ce qui est représenté par la sortie O de ce questionnement, il est effectué une sommation des quantités de polluant SNOx rejetées pendant un nombre Z prédéterminé de fenêtres successives. Le seuil de fenêtres b peut être un seuil correspondant au nombre de fenêtres du roulage courant. Le seuil b est avantageusement calibrable.

Si la différence SNOx X de la sommation des quantités de polluant SNOx avec la quantité totale de polluant cible pour ces fenêtres est inférieure à un deuxième seuil c, ce qui est illustré par la sortie O du questionnement SNOx X<c, si l'efficacité de traitement de l'élément de dépollution RCS est jugée suffisante pour traiter les émissions du polluant prédéterminé avec le deuxième mode CO2 f, le premier mode NOx f est remplacé par un autre mode CO2 f de réglage pour le pilotage des paramètres du groupe motopropulseur GMP, au début de la fenêtre courante suivante. Cet autre mode CO2 f est moins avantageux en termes d'émission à la source de NOx, mais la dépollution reste optimale car l'efficacité de l'élément de dépollution RCS permet de traiter le surcroît de NOx.

Les traits en pointillés symbolisent un mode de réalisation préférentiel de la présente invention lequel montre un possible retour de l'autre mode CO2 f vers le premier mode NOx f si le niveau d'émission requis de NOx ne peut plus être atteint avec l'efficacité attendue de l'élément de dépollution RCS, ou un maintien de cet autre mode CO2 f dans le cas contraire.

Pendant un des modes CO2 f autres que le premier mode NOx f, quand la différence de la quantité de polluant ΔX en sortie de la ligne avec la quantité de polluant cible est inférieure au premier seuil a pour ce mode autre que le premier mode NOx f, le mode autre que le premier mode NOx f est maintenu. Il assure en effet une dépollution suffisante pour cette fenêtre. Il est retourné par le trait en pointillés O pour oui partant de ΔX< a pour revenir à CO2 f.

Inversement, pendant cet autre mode CO2 f, quand la différence de la quantité de polluant ΔX en sortie de la ligne avec la quantité de polluant cible est supérieure au premier seuil a, il est effectué une sommation des quantités de polluant SNOx rejetées sur un nombre Z prédéterminé de fenêtres successives. Ceci est montré par le trait en pointillés N pour non en diagonale partant due ΔX<a vers SNOx X<c.

Les premier a et deuxième seuils c a, c peuvent être calibrables et peuvent être égaux à zéro pour que les quantités de polluant puissent être équivalentes aux quantités cibles de polluant afin que la dépollution suive de plus près la consigne cible.

Quand la différence de la sommation SNOx X des quantités de polluant SNOx avec la quantité totale de polluant cible pour ces fenêtres est inférieure au deuxième seuil c, l'autre mode CO2 f est conservé. Ceci est illustré par le trait en pointillés O pour oui partant de SNOx X<c vers CO2f.

Quand la différence de la sommation SNOx X des quantités de polluant SNOx avec la quantité totale de polluant cible pour ces fenêtres est supérieure au deuxième seuil c, le premier mode NOx f est rétabli. Ceci est illustré par le trait en pointillés N pour non partant de SNOx X<c vers NOx. Le nombre Z prédéterminé de fenêtres successives peut être le nombre Z de fenêtres depuis un début du roulage courant.

Les paramètres de fonctionnement des modes de réglage peuvent concerner unitairement ou en combinaison la gestion des lois de passage du groupe motopropulseur GMP, la gestion des prélèvements énergétiques effectués sur le groupe motopropulseur GMP, les modes de combustion du moteur MTH thermique.

Ledit au moins un deuxième mode CO2 f peut être choisi pour entraîner une diminution de rejet de dioxyde de carbone dans la ligne d'échappement et une diminution d'une consommation de carburant par le moteur MTH thermique.

L'invention concerne aussi un groupe motopropulseur GMP d'un véhicule automobile comprenant un moteur MTH thermique et ses éléments auxiliaires dont une ligne d'échappement comprenant au moins un moyen de dépollution d'un polluant rejeté et des moyens de mesure ou d'estimation du polluant en aval de l'élément de dépollution RCS. Des exemples d'éléments auxiliaires ont été précédemment mentionnés.

Le moteur MTH et les éléments auxiliaires du groupe motopropulseur GMP sont pilotés par une unité de contrôle commande comportant des moyens de mémorisation d'au moins deux modes NOx f, CO2 f de réglage de paramètres de fonctionnement du groupe motopropulseur GMP et des moyens de calcul d'une quantité cible de polluant rejeté.

Selon l'invention, l'unité de contrôle commande comporte des moyens de comparaison des quantités de polluant courante et cible sur plusieurs intervalles de temps, notamment sur la fenêtre courante et une série de fenêtre successives précédentes, avantageusement depuis le début du roulage en cours. L'unité de contrôle commande comprend des moyens de mise en oeuvre d'un tel procédé de pilotage de paramètres de fonctionnement d'un groupe motopropulseur GMP.

Dans une application préférentielle de la présente invention, le polluant est des oxydes d'azote et l'élément de dépollution est un système de réduction catalytique sélective avec injection d'agent réducteur sous forme d'urée.

Dans ce cas, l'injection d'urée du système RCS peut être calibrée de telle sorte soit à maximiser l'efficacité de l'élément de dépollution RCS, soit à maîtriser la consommation d'urée tout en maintenant l'émission de NOx du véhicule au niveau requis par adaptation des émissions à la source du moteur.

Le procédé selon l'invention permet de garantir un mode de fonctionnement adapté à chaque situation de vie, d'atteindre les cibles d'émissions réglementaires, de minimiser la consommation de carburant et, le cas échéant, la consommation d'agent de dépollution. Le procédé selon l'invention permet de garantir la durabilité des composants de l'élément de dépollution, avantageusement un système de post-traitement RCS.

Pour le constructeur automobile, il est obtenu une diminution des coûts engendrés par des possibles retours d'un véhicule sous garantie en après-vente et une amélioration de la perception de la fiabilité du véhicule par le conducteur d'où une amélioration de l'image de marque du constructeur.

L'invention n'est nullement limitée aux modes de réalisation décrits et illustrés qui n'ont été donnés qu'à titre d'exemples.

## Revendications

1. Procédé de pilotage de paramètres de fonctionnement d'un groupe motopropulseur (GMP) de véhicule automobile, dans lequel un suivi des émissions d'un polluant prédéterminé rejeté par une ligne d'échappement est effectué, ce polluant prédéterminé étant au moins partiellement traité par un élément de dépollution (RCS) présent dans la ligne d'échappement, une efficacité de traitement de l'élément de dépollution (RCS) étant déterminée, le pilotage étant réalisé à partir d'un premier mode (NOx f) et d'au moins un deuxième mode (CO2 f) de réglage des paramètres de fonctionnement, le premier mode (NOx f) étant moins émissif de ce polluant à la source que ledit au moins deuxième mode (CO2 f), un nombre (Z) de fenêtres successives de durée déterminées incluant une fenêtre courante étant fixée pour le suivi des émissions du polluant prédéterminé, **caractérisé en ce que**, lors d'un premier mode (NOx f),
- on détermine pour la fenêtre courante, la différence de la quantité de polluant (ΔX) en sortie de la ligne avec une quantité de polluant cible,
- on détermine la somme de ces différences (SNOx X) sur nombre (Z) prédéterminé de fenêtres successives incluant la fenêtre courante,
et, si la différence de la quantité de polluant (ΔX) en sortie de la ligne avec une quantité de polluant cible pour la fenêtre courant est inférieure à un premier seuil (a), que la somme de ces différences sur le nombre (Z) prédéterminé de fenêtres successives est inférieure à un deuxième seuil (c), et que l'efficacité de traitement de l'élément de dépollution (RCS) est jugée suffisante pour traiter les émissions du polluant prédéterminé avec le deuxième mode (CO2 f), le premier mode (NOx f) est remplacé au début de la fenêtre courante suivante par le deuxième mode (CO2 f) de réglage pour le pilotage des paramètres du groupe motopropulseur (GMP), sinon on garde le premier mode (NOx f) pour la fenêtre courante suivante.

2. Procédé selon la revendication précédente, dans lequel, quand au moins trois modes de réglage sont présents, en cas de remplacement du premier mode (NOx f), ce premier mode (NOx f) est remplacé par le moins émissif des au moins deux autres modes (CO2 f).

3. Procédé selon l'une quelconque des deux revendications précédentes, dans lequel, pendant un des modes (CO2 f) autres que le premier mode (NOx f), quand la différence de la quantité de polluant (ΔX) en sortie de la ligne avec la quantité de polluant cible est inférieure au premier seuil (a) pour ce mode (CO2 f) autre que le premier mode (NOx f), le mode autre (CO2 f) que le premier mode (NOx f) est maintenu.

4. Procédé selon la revendication précédente, dans lequel, pendant cet autre mode (CO2 f), quand la différence de la quantité de polluant (ΔX) en sortie de la ligne avec la quantité de polluant cible est supérieure au premier seuil (a), il est effectué une sommation des quantités de polluant (SNOx) rejetées sur un nombre (Z) prédéterminé de fenêtres successives et, quand la différence de la sommation (SNOx X) des quantités de polluant (SNOx) avec la quantité totale de polluant cible pour ces fenêtres est inférieure au deuxième seuil (c), l'autre mode (CO2 f) est conservé tandis que, quand la différence de la sommation (SNOx X) des quantités de polluant (SNOx) avec la quantité totale de polluant cible pour ces fenêtres est supérieure au deuxième seuil (c), le premier mode (NOx f) est rétabli.

5. Procédé selon l'une quelconque des revendications précédentes, dans lequel le nombre (Z) prédéterminé de fenêtres successives est le nombre (Z) de fenêtres depuis un début du roulage courant.

6. Procédé selon l'une quelconque des revendications précédentes, dans lequel les paramètres de fonctionnement des modes de réglage concernent unitairement ou en combinaison la gestion des lois de passage du groupe motopropulseur (GMP), la gestion des prélèvements énergétiques effectués sur le groupe motopropulseur (GMP), les modes de combustion du moteur (MTH) thermique.

7. Procédé selon l'une quelconque des revendications précédentes, dans lequel ledit au moins un deuxième mode (CO2 f) entraîne une diminution de rejet de dioxyde de carbone dans la ligne d'échappement et une diminution de la consommation de carburant par le moteur (MTH) thermique.

8. Procédé selon l'une quelconque des revendications précédentes, dans lequel les premier (a) et deuxième seuils (c) sont égaux à zéro.

9. Groupe motopropulseur (GMP) d'un véhicule automobile comprenant un moteur (MTH) thermique et ses éléments auxiliaires dont une ligne d'échappement comprenant au moins un moyen de dépollution d'un polluant rejeté et des moyens de mesure ou d'estimation du polluant en aval de l'élément de dépollution (RCS), le moteur (MTH) et les éléments auxiliaires du groupe motopropulseur (GMP) étant pilotés par une unité de contrôle commande comportant des moyens de mémorisation d'au moins deux modes (NOx f, CO2 f) de réglage de paramètres de fonctionnement du groupe motopropulseur (GMP) et des moyens de calcul d'une quantité cible de polluant rejeté, **caractérisé en ce que** l'unité de contrôle commande comporte des moyens de comparaison des quantités de polluant courante et cible sur plusieurs intervalles de temps et des moyens de mise en oeuvre d'un procédé de pilotage de paramètres de fonctionnement d'un groupe motopropulseur (GMP) selon l'une quelconque des revendications précédentes.

10. Groupe motopropulseur (GMP) selon la revendication précédente, dans lequel le polluant est sous forme d'oxydes d'azote et l'élément de dépollution est un système de réduction catalytique sélective.
